(19) Europäisches Patentamt
European Patent Office
Office européen des brevets

(11) EP 2 205 535 B1

(12) EUROPÄISCHE PATENTSCHRIFT

(45) Veröffentlichungstag und Bekanntmachung des Hinweises auf die Patenterteilung:
09.09.2015 Patentblatt 2015/37

(21) Anmeldenummer: 08843252.1

(22) Anmeldetag: 17.10.2008

(51) Int Cl.:
C04B 28/04 (2006.01)          C04B 28/12 (2006.01)
C04B 28/02 (2006.01)          C04B 28/24 (2006.01)
C04B 14/24 (2006.01)

(86) Internationale Anmeldenummer:
PCT/EP2008/008795

(87) Internationale Veröffentlichungsnummer:
WO 2009/052997 (30.04.2009 Gazette 2009/18)

(54) **PUTZMÖRTEL FÜR EINEN INNENPUTZ**

PLASTERING MORTAR FOR AN INTERNAL PLASTER

MORTIER D'ENDUIT POUR UN ENDUIT INTÉRIEUR

(84) Benannte Vertragsstaaten:
AT BE BG CH CY CZ DE DK EE ES FI FR GB GR HR HU IE IS IT LI LT LU LV MC MT NL NO PL PT RO SE SI SK TR

(30) Priorität: 24.10.2007 DE 102007050669

(43) Veröffentlichungstag der Anmeldung:
14.07.2010 Patentblatt 2010/28

(73) Patentinhaber: Quick-Mix Gruppe GmbH & Co. KG
49090 Osnabrück (DE)

(72) Erfinder: KANIG, Martin
49565 Bramsche (DE)

(74) Vertreter: Busse & Busse
PATENT- UND RECHTSANWÄLTE
Partnerschaft mbB
Grosshandelsring 6
49084 Osnabrück (DE)

(56) Entgegenhaltungen:
EP-A- 0 144 965      EP-A- 0 417 418
EP-A- 1 489 056      DE-A1- 19 540 273

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen Putzmörtel für einen Innenputz. Innenputze, die nicht nur lediglich als Träger von Anstrichen oder Tapeten dienen, werden in warmen und heißen Klimazonen häufig, in gemäßigten und kalten Klimazonen selten verwandt. Anders als Außengrundputze, die vor allem auf die Abwehr und die Beständigkeit gegen Wettereinflüsse, insbesondere Nässe und Kälte, auszurichten sind, werden Innenputze auf eine gute und leichte Verarbeitbarkeit und auf beschichtbare, glatte oder strukturierte Oberflächen ausgerichtet.

Freiliegende - unbedeckte - Innenputze, und solche, die als Träger von offenporigen Anstrichen oder Tapeten dienen, stoßen aber vor allem in gemäßigten und kühleren Klimazonen auf den Vorbehalt mangelnder haptischer und klimatischer Annehmlichkeit - sie wirken nach Art von Steinmaterial bei Berührung kalt und neigen auch bei Temperaturwechseln und höherer Luftfeuchtigkeit zum "Schwitzen", also zum Beschlagen.

Grundsätzlich andere Materialien wie Holz oder Lehm, die allerdings von der Verarbeitung und von der Robustheit und Haltbarkeit eingeschränkt zu betrachten sind, sind in Bezug auf das Raumklima weniger anfällig für ein "Schwitzen". Holz fühlt sich bei Berührung auch relativ warm an.

Aufgabe der Erfindung ist es hiernach, einen Putzmörtel für einen Innenputz zu schaffen, der die einfache Verarbeitbarkeit, Robustheit und Haltbarkeit herkömmlicher Putzmörtel mit den Annehmlichkeiten anderer, warmer, wohnlicher und klimatisch ausgleichender Werkstoffe verbindet.

Gemäß der Erfindung wird diese Aufgabe mit einem Putzmörtel nach dem Anspruch 1 gelöst. Bei diesem Mörtel wird das angestrebte "warme" Berührungsgefühl ähnlich dem des Holzes durch einen hohen Anteil an Leichtbestandteilen, wie Mikrohohlkugeln und Perlite bzw. Kalziumsilicathydrat erzielt. Ausschlaggebend für dieses Gefühl ist ein Wärmeeindringwert b, der sich anhand einer Wärmeleitfähigkeit λ und einer Speicherzahl S berechnet, wobei sich S aus dem Produkt von Rohdichte p und spezifischer Wärme ergibt:

$$S = \rho \times c$$

$$b = \sqrt{S x \lambda}$$

Gleichzeitig ist zur Stabilisierung des Raumklimas und zum Ausschluß des Schwitzens eine hohe Wasseraufnahme bedeutsam. Diese wird durch einen erheblichen Kapillaranteil des Innenputzes und durch Offenporigkeit seiner Bestandteile wie Perlite und Kalziumsilicathydrat, aber auch durch Füllstoffe wie Gesteinsmehle erzielt, die zwar zunächst einen erheblichen Teil des Anmachwassers aufsaugen, nach dem Trocknen aber dann auch Kapillaren mit entsprechender Wasseraufnahmefähigkeit bereitstellen. Im Ergebnis wird dabei ein Innenputz erzielbar, der sich etwa wie eine Holzoberfläche "warm" anfühlt und der ohne Neigung zum Schwitzen "trocken" bleibt, wobei eine sehr hohe Wasseraufnahme (und auch Wieder-Abgabe) durch den Putz ermöglicht ist. Im Verhältnis zu üblichen Kalk- oder Kalkzement-Putzen nimmt ein solcher Putz innerhalb von 24 Stunden bei hoher Luftfeuchtigkeit wenigstens 20% mehr an Wasser auf. Die Feuchtigkeitsabgabe bei trockener Luft ist im Vergleich mit herkömmlichen Putzen relativ noch deutlich höher. Dabei ist die Erhöhung der Wärmeleitfähigkeit mit der Wasseraufnahme überraschend gering mit nur etwa 2% je Prozent an Wasseraufnahme und liegt nahe der von Holz. Dies läßt sich aufgrund von Messungen zur kapillaren Sättigung erklären, denen zufolge ein solcher getesteter Mörtel über 68% Porosität aufweist, davon aber nur 27% (also etwa 40% der Poren) kapillar zu sättigen sind - im übrigen bleiben Luftporen mit entsprechender Isolierwirkung ungesättigt erhalten. Weiter ist die gemessene Wärmeleitfähigkeit λ, bezogen auf die (geringe) Rohdichte überproportional geringer. Dementsprechend ergibt sich eine höhere Oberflächentemperatur an derart verputzten Wänden. Dies wie die gute Wasseraufnahmefähigkeit beugt einem Schwitzen und einer Schimmelbildung vor.

Beide Eigenschaften des neuen Putzmörtels wirken für eine Annehmlichkeit des Benutzers zusammen. Die gefühlte Wärme und die gefühlte Trockenheit der Wand schaffen einen "Wohlfühl"-Putz und dabei eine Wand (oder Decke), die dem vertrauten und durchaus auch heute noch mit den traditionellen Baustoffen Holz und Lehm - insbesondere Leichtlehm - angestrebten Kontakt entspricht. Dieses Wohlfühlen ist aber auch im Abstand von der Wand zu spüren, deren niedrigerer Wärmeeindringwert und auch deren Speichereigenschaften in Bezug auf Raumfeuchtigkeit ausgleichend und angenehm wirken.

Die positiven Wirkungen lassen sich nunmehr mit einem Innenputz erzielen, der sich beim Neu- oder Altbau mit überaus geläufigen bautechnischen Mitteln einfach aufbringen läßt und nicht etwa aufwendige Unterkonstruktionen oder Wandvorbereitungen benötigt und der auch anders als Holz dauerhaft, verrottungs- und schimmelunanfällig ist sowie anders als Lehm eine ausreichende Festigkeit für die Benutzung bietet. Der Putzmörtel kann grundsätzlich als Werktrockenmörtel zur Zubereitung am Bau mit Hilfe von Anmachwasser vorgesehen werden, wobei ein solcher Werktrockenmörtel als Sackware wie auch in loser Form für die Bereitstellung in Silos vorgesehen werden kann. Gegebenenfalls kommt auch die werksseitige Lieferung von Naßmörtel, also gebrauchsfertig mit Anmachwasser gemischt, in Betracht, ebenso als Baustellenputzmörtel, der aus den einzelnen Ausgangsstoffen auf der Baustelle zusammengesetzt und gemischt wird.

Als Bindemittel kommen in erster Linie bewährte mineralische Binder wie Kalkhydrat, Zement und/oder Gips in Betracht. Zusätze von natürlichen oder künstlichen Puzzolanen können die Endfestigkeit erhöhen. Auch natürliche hydraulische Kalkanteile fördern eine zementartige Erhärtung.

Bei den porösen Leichtzuschlägen kommen insbesondere Perlite zur Verwendung, die in expandierter Form besonders leicht sind und unter den Baustoffen breite Verwendung finden. Ebenso kommt als Leichtzuschlag Calziumsilicathydrat wie Tobermorit in Betracht, bei dem allerdings wegen der höheren Dichte auch höhere Prozentzahlen für den Gewichtsanteil im Putzmörtel anzusetzen sind, auch wenn nur der gleiche Volumenanteil angestrebt wird. Bei Mischungen aus Perlite und Calziumsilicathydrat werden die unterschiedlichen Dichten im Sinne entsprechender Volumenanteile berücksichtigt.

An Gesteinsmehl, das gleichfalls für eine hohe Wasseraufnahme beim Anmischen des Putzmörtels und für die Schaffung entsprechender absorbtions- und saugfähiger Kapillaren nach dem Trocknen des Putzmörtels nützlich ist, kommen beispielsweise Quarzmehle oder Kalksteinmehle in Betracht.

Üblicherweise werden dem Putz noch Additive hinzugesetzt, die besondere Aufgaben zu übernehmen vermögen, auch wenn deren Anteil im Putzmörtel nur unter 1 Gew.% ausmacht. So können beispielsweise organische Verarbeitungshilfsstoffe wie Methylzelluloseäther zur Wasserrückhaltung dienen, um insbesondere bei dem Aufbringen von Putz auf Wände in trockenen Altbauten ein "Verbrennen" des Putzes durch wandseitiges Absaugen des Wassers zu verhindern. Stärkeäther oder organische oder mineralische Fasern können als Stellmittel den frischen Putz an der Wand halten und versteifen. Luftporenbildner können den Putz zusätzlich leichtem.

Putze mit teilweise übereinstimmenden oder ähnlichen Bestandteilen finden sich im Stand der Technik für sehr unterschiedliche Zielsetzungen definiert.

Aus der EP 0 144 965 B1 ist ein Putzmörtel für das maschinelle Fördern und/oder Putzen mit einer Zusammensetzung beschrieben, die Schaumglasgranulat und nach einer Sieblinie zusammenpassende Zuschlagsstoffe und Bindemittel enthält. Schaumglasgranulat ist dabei ein leichter, grobkörniger und geschlossenporiger Bestandteil, der einerseits die Ergiebigkeit des Putzes bezogen auf sein Gewicht vergrößert, der vor allem auch die Maschinenverarbeitbarkeit und das Temperaturdehnverhalten verbessert und der in seiner Gesamtkonzeption mit Gesteinsmehlen und mit mineralischen Zuschlagsstoffen nach einer vorgegebenen Sieblinie ohne Anfälligkeit für eine Entmischung zu transportieren ist. Die Eigenschaften dieses Putzmörtels sind allerdings nur auf das Wärmedämmverhalten, nicht aber auf eine für ein Raumklima wesentliche Feuchtigkeitsaufnahme und -abgabe ausgelegt.

Die EP 1 489 056 A2 umreißt einen Oberputz für eine wärmespeicherfähige Wand als Abschluss auf einer Außen- oder Innengrundschicht, der Mikrohohlglaskugeln in einer Volumenmenge von 5 % bis 70 % aufweisen soll. Dieser Oberputz soll durch die Glashohlkügelchen relativ diffusionsdicht gestaltet sein und Wärmeeinstrahlung einfangen und an den Grundputz weiterleiten. Dieses Konzept ist also auf eine Absorption von Umweltwärme und Solarstrahlung ausgerichtet und auch mit den geschlossenporigen Glashohlkügelchen auf eine Wärmeisolation ausgelegt. Damit fehlt allerdings die bei Innenputzen wünschenswerte Feuchtigkeitsaufnahme (und Abgabe), um die Luftfeuchte und auch ein Beschlagen an der Oberfläche zu reduzieren.

Die DE 195 40 273 A1 beschreibt einen als Werk-Trockenmörtel herstellbaren pumpfähigen Leichtmauermörtel, bei dem Schaumglasgranulat als Leichtzuschlagsstoff zur Wärmedämmung beigemischt ist und weiterhin mit Zelluloseether und einem Luftporenbildner auch die Pumpfähigkeit verbessert wird. Der Mörtel soll zum Teil schlecht miteinander verträgliche Anforderungen wie gute Pumpfähigkeit, Standfestigkeit beim Auftragen auf eine Steinschicht, niedriger Pumpendruck mit Rücksicht auf druckempfindliche Leichtzuschlagstoffe und ausreichende Festigkeit im erhärteten Zustand erfüllen. Ein solcher Mörtel hat allerdings keine raumklimatischen Anforderungen wie etwa ein Innenputz zu erfüllen und ist nicht auf eine Feuchtigkeitsabsorption ausgelegt.

Die EP 0 417 418 A1 betrifft einen Werk-Trockenmörtel auf der Basis von mineralischen Bindemitteln, mineralischen Sandzuschlägen, Leichtzusatzstoffen und Zusatzmitteln, der als Leichtzuschlag Calciumsilicathydrat-Granulat in einem Gewichtsanteil von 10 bis 60 enthält. Dieser soll insbesondere zur Herstellung von Außenputzen dienen. Um einen Werk-Trockenmörtel bereitzustellen, der in einer einzigen Schicht Putz aufgetragen werden kann und keinerlei Vorbehandlung oder Nachbehandlung benötigt, soll ein Produkt mit geringerer Rohdichte zur leichteren Verarbeitung und zur Verbesserung des Standvermögens, insbesondere auch bei dickerem Putzauftrag, vorgesehen werden. Dazu wird hochporöses Calciumsilicathydrat mit einem Anteil von z. B. 80 Volumen-% beigemischt.

Ein solcher vorwiegend als Außenputz gedachter Werk-Trockenmörtel ist auf die Verarbeitungseigenschaften, vor allem auf die einlagige Verarbeitung, ausgerichtet, nicht aber auf die raumklimatischen Eigenschaften eines Innenputzes. Vielmehr soll er insbesondere mit Hilfe von Hydrophobierungsmitteln als Außenputz wasserabweisend sein. Der gemäß der vorliegenden Erfindung erzielte Innenputz erfüllt gänzlich andere Anforderungen.

Ein Ausführungsbeispiel der Erfindung wird nachfolgend näher beschrieben:
Eine Trockenmischung für einen Innenputz mit folgenden Bestandteilen in Gew. %: Bindemittel

| | |
|---|---|
| (Kalkhydrat und Portlandzement) | 21 % |
| Portlandzement | 14 % |
| Kalkhydrat | 7 % |

(fortgesetzt)

| | |
|---|---|
| Kalksteinmehl | 10 % |
| Trockensande bis 1 mm | 50,3 % |
| Perlite 1 bis 2 mm | 3 % |
| Calziumsilicathydrat | 11 % |
| Microhohlkugeln | 1 % |
| Methylzelluloseäther | 0,2 % |
| Stärkeäther | 0,02 % |
| Luftporenbildner | 0,05 %, |

(wobei die expandierten Perlite wegen der geringen Dichte volumetrisch dosiert werden), ist mit Anmachwasser zu versetzen und erzielt dann einen gut zu verarbeitenden und standfesten Wand- und Deckenputz.

Die Frischmörtelrohdichte beträgt 1250 bis 1300 kg pro m³.

Ein weiteres geeignetes Ausführungsbeispiel hat folgende Bestandteile in Gew%:

**Bindemittel**

| | |
|---|---|
| (Portlandzement und Kalkhydrat) | 23 % |
| Kalksteinmehl | 15 % |
| Trockensande bis 1 mm | 50,3 % |
| Perlite bis 2 mm | 3 % |
| Calziumsilicathydrat | ---- |
| Microhohlkugeln | 10% |
| Methylzelluloseäther | 0,2% |
| Stärkeäther | 0,02% |
| Luftporenbildner | 0,05% |

Nach dem Abbinden und Trocknen des erzielten Putzes ergibt sich eine Speicherzahl S [kJ/m³K] von 850 und eine Wärmeeindringzahl b [J/s$^{0,5}$m²K] von 406. Im Vergleich mit anderen Wandbaustoffen, die des Wohlgefühls wegen oft verwandt, von der Verarbeitung und der Haltbarkeit aber unvorteilhafter sind, ergibt sich für die Speicherzahl und die Wärmeeindringzahl folgende Vergleichstabelle:

| | S | b |
|---|---|---|
| neuer Putzmörtel | 850 | 406 |
| Kalkzementputz | 1395 | 829 |
| Gipsputz | 810 | 493 |
| Leichtlehm | 880 | 469 |
| Lehmputz | 1700 | 1166 |
| Beton | 2400 | 2245 |
| Holz | 1260 | 405 |

wobei der noch relativ vorteilhaft erscheinende Gipsputz bei einer Rohdichte von 900kg/m³ nicht als wasserfest eingestuft werden kann und dementsprechend nur bedingt verwendbar ist. Die sich von der Wärmeeindringzahl her darstellende Eigenschaft des erfindungsgemäßen Putzmörtels wird durch seine hohe Wasseraufnahme und Saugfähigkeit ergänzt, wobei sich insbesondere in Langzeitversuchen herausgestellt hat, daß der erfindungsgemäße Putzmörtel weitaus absorbtions- und saugfähiger ist als gängige herkömmliche Innenputze.

**Patentansprüche**

1. Putzmörtel für einen Innenputz mit folgenden Trockenbestandteilen:

   10 bis 25 Gew.% an mineralischen Bindemitteln aus Kalkhydrat, Zement und/oder Gips 0,5 bis 20 Gew.% Glas-Mikrohohlkugeln mit einer Körnung bis 0,3 mm 1 bis 15 Gew.% eines offenporigen Leichtzuschlags 8 bis 15 Gew.% Gesteinsmehl als Füllstoff bis 1 % Additive und Sand zu insgesamt 100 Gew.%, wobei der poröse Leichtzuschlag 1 bis 6 Gew.% Perlite aufweist und wahlweise auch 5 bis 15 Gew.% an Tobermorit oder ähnlichem Calziumsilicathydrat umfasst.

2. Putzmörtel nach Anspruch 1, **dadurch gekennzeichnet, dass** der poröse Leichtzuschlag bis zu 15 Gew.% eine Mischung von Perlite und Calziumsilicathydrat ist.

3. Putzmörtel nach Anspruch 1 oder 2, **dadurch gekennzeichnet, dass** das Bindemittel aus einer Mischung von Kalkhydrat und Zement besteht.

4. Putzmörtel nach einem der Ansprüche 1 bis 3, **dadurch gekennzeichnet, dass** er Puzzolane als Zusatz zu den mineralischen Bindemitteln aufweist.

5. Putzmörtel nach einem der Ansprüche 1 bis 4, **dadurch gekennzeichnet, dass** das Bindemittel natürlichen hydraulischen Kalk enthält.

6. Putzmörtel nach einem der Ansprüche 1 bis 5, **dadurch gekennzeichnet, dass** er als Werktrockenmörtel vorgemischt ist.

7. Putzmörtel nach einem der Ansprüche 1 bis 5, **dadurch gekennzeichnet, dass** er als Frischmörtel mit Anmachwasser gemischt ist.

**Claims**

1. Plastering mortar for an internal plaster, comprising the following dry constituents:

   from 10 to 25 wt.% of mineral binders made of lime hydrate, cement and/or gypsum from 0.5 to 20 wt.% of hollow glass microspheres having a grain size of up to 0.3 mm from 1 to 15 wt.% of an open-pore lightweight aggregate
from 8 to 15 wt.% of stone dust as a filler
up to 1 % of additives
and sand to make up 100 wt.%
wherein the porous lightweight aggregate has from 1 to 6 wt.% of perlite and optionally also comprises from 5 to 15 wt.% of tobermorite or similar calcium silicate hydrate.

2. Plastering mortar according to claim 1, **characterised in that** the porous lightweight aggregate is up to 15 wt.% of a mixture of perlite and calcium silicate hydrate.

3. Plastering mortar according to either claim 1 or claim 2, **characterised in that** the binder consists of a mixture of lime hydrate and cement.

4. Plastering mortar according to any of claims 1 to 3, **characterised in that** said mortar has pozzolana as an addition to the mineral binders.

5. Plastering mortar according to any of claims 1 to 4, **characterised in that** the binder contains natural hydraulic lime.

6. Plastering mortar according to any of claims 1 to 5, **characterised in that** said mortar is premixed as a dry mortar.

7. Plastering mortar according to any of claims 1 to 5, **characterised in that** said mortar is mixed with mixing water as fresh mortar.

**Revendications**

1. Mortier d'enduit pour un enduit intérieur, comprenant les composants suivants à sec :

    10 à 25 % en poids de liants minéraux parmi la chaux hydratée, le ciment et/ou le plâtre,
    0,5 à 20 % en poids de microbilles creuses en verre avec des grains allant jusqu'à 0,3 mm,
    1 à 15 % en poids d'un agrégat léger poreux,
    8 à 15 % en poids de poudre de roche servant de matériel de remplissage,
    jusqu'à 1 % d'additifs,
    et du sable pour atteindre 100 % en poids,
    l'agrégat léger poreux présentant 1 à 6 % en poids de perlite et comprenant également au choix de 5 à 15 % en poids de tobermorite ou de silicate de calcium hydraté équivalent.

2. Mortier d'enduit selon la revendication 1, **caractérisé en ce que** l'agrégat léger poreux est jusqu'à 15% en poids un mélange de perlite et de silicate de calcium hydraté.

3. Mortier d'enduit selon la revendication 1 ou 2, **caractérisé en ce que** le liant est composé d'un mélange de chaux hydratée et de ciment.

4. Mortier d'enduit selon une des revendications 1 à 3, **caractérisé en ce qu'**il présente du pouzzolane servant de supplément aux liants minéraux.

5. Mortier d'enduit selon une des revendications 1 à 4, **caractérisé en ce que** le liant contient de la chaux hydraulique naturelle.

6. Mortier d'enduit selon une des revendications 1 à 5, **caractérisé en ce qu'**il est prémélangé sous forme de mortier sec prémélangé.

7. Mortier d'enduit selon une des revendications 1 à 5, **caractérisé en ce qu'**il est mélangé sous forme de mortier frais avec de l'eau de gâchage.

EP 2 205 535 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0144965 B1
- EP 1489056 A2

- DE 19540273 A1
- EP 0417418 A1